# FASCICULE DE BREVET EUROPEEN

(11) **EP 3 264 916 B1**
(45) Date de publication et mention de la délivrance du brevet: **08.05.2019**
(21) Numéro de dépôt: 16712236.5
(22) Date de dépôt: 07.03.2016
(51) Int. Cl.: A23L 13/30, A23L 17/20, A23L 2/56, A23L 27/10, A23L 27/12, A23L 27/26, A23L 27/29

(54) **EXTRACTION ET CONCENTRATION DE SAVEURS ALIMENTAIRES**
EXTRAKTION UND KONZENTRATION VON LEBENSMITTEL-AROMEN.
EXTRACTION AND CONCENTRATION OF FOOD FLAVOURS

(30) Priorité: 06.03.2015 LU 92675; 09.03.2015 LU 92677
(43) Date de publication de la demande: 10.01.2018
(73) Titulaire: Citrus Junos S.a r.l., 2350 Luxembourg (LU)
(72) Inventeur: ALLENO, Yannick, 75008 Paris (FR)
(74) Mandataire: Office Freylinger
(86) Numéro de dépôt international: PCT/EP2016/054826
(87) Numéro de publication internationale: WO 2016/142352

(56) Documents cités:
- EP-A2- 0 040 178
- EP-A2- 0 110 638
- WO-A1-2010/066061
- WO-A1-2013/087795
- CH-A- 511 567
- FR-A1- 2 911 474
- GB-A- 617 776
- US-A- 5 653 163
- DATABASE WPI Week 201272 Thomson Scientific, London, GB; AN 2012-N86843 XP002750643, & CN 102 613 621 A (SHANDONG SHUN GARDEN JUJUBE IND CO LTD) 1 août 2012 (2012-08-01)
- DATABASE WPI Week 200523 Thomson Scientific, London, GB; AN 2005-215668 XP002750644, & CN 1 554 290 A (GUO Y) 15 décembre 2004 (2004-12-15)
- DATABASE WPI Week 201103 Thomson Scientific, London, GB; AN 2010-Q52673 XP002750741, & KR 2010 0126935 A (RED COMMUNICATION CO LTD) 3 décembre 2010 (2010-12-03)
- MULLER J G: "FREEZE CONCENTRATION of Food Liquids: THEORY, PRACTICE, AND ECONOMICS", FOOD TECHNOLOGY,, vol. 21, no. 1, janvier 1967 (1967-01), pages 49-61, XP001349591,
- DATABASE WPI Week 201561 Thomson Scientific, London, GB; AN 2015-46945K XP002750645, & CN 104 664 296 A (SICHUAN CHUANNAN BREWING CO LTD) 3 juin 2015 (2015-06-03)

## Description

### Domaine technique

La présente invention concerne un procédé de traitement de produits d'alimentation, comme les fruits, les légumes, les viandes, les poissons, crustacés, coquillages ou condiments afin d'en extraire et concentrer les saveurs, comprenant le cas échéant l'utilisation de ces concentrés pour la préparation de produits les comprenant.

### Etat de la technique

Au-delà de leur apport calorique, les aliments utilisés dans la cuisine sont choisis pour leur saveurs et surtout pour les combinaisons surprenantes de saveurs qui peuvent en résulter.

La combinaison appropriée des différentes saveurs des aliments fait la richesse culinaire et est à la base des innombrables plats et préparations de toutes les cuisines du monde.

Même si tous les aliments ont des saveurs particulières, leur goût est parfois de trop faible intensité pour certaines préparations. En particulier, la combinaison de différentes saveurs résulte presqu'immanquablement dans le masquage de certaines notes ou dans le déséquilibre gustatif. De plus, les techniques classiques, comme la réduction par la chaleur, telle qu'appliquée par exemple dans le document CN102613621 A, ont trop souvent l'effet de modifier sinon de dénaturer certains goûts et composants.

Le domaine de prédilection de la composition de saveurs est évidemment celui des sauces. La sauce est censée apporter de la cohésion à un plat en unissant dans un rapport d'harmonie des produits tout à fait différents. Or, l'assemblage des saveurs au départ des matières premières ne donne pas toujours le résultat escompté, même pour des cuisiniers forts d'un grand savoir et d'une longue expérience.

### Objet de l'invention

Un objet de la présente invention est de proposer un nouveau procédé de traiter les aliments en vue d'en extraire les saveurs afin de pouvoir les composer plus librement, de manière plus prévisible et surtout afin de pouvoir réaliser des préparations et plats d'excellente qualité, de grande précision et de préférence avec des goûts nouveaux, impossibles jusqu'ici.

### Description générale de l'invention

Afin de résoudre au moins certains des problèmes mentionnés ci-dessus, la présente invention propose un procédé d'extraction et de concentration des saveurs d'un ou de plusieurs aliments, comprenant les étapes de
(a) cuisson du ou des aliments sous vide pendant une durée de 1 à 15 heures, de préférence entre 1,5 et 13 heures à une température entre 50 et 90°C, de préférence entre 70 et 88°C, de manière davantage préférée entre 80 et 86°C, afin d'obtenir un exsudat du ou des aliments,
(b) récolte de l'exsudat ainsi obtenu,
(c) cristallisation de l'eau contenue dans l'exsudat sous forme de glace par congélation de l'exsudat, et
(d) obtention d'un extrait concentré de l'exsudat par séparation des cristaux de glace du restant de l'exsudat,
dans lequel l'étape (a) de cuisson sous vide est réalisée dans des sachets de type sachets sous vide.

Lors des recherches qui ont mené à la présente invention, il a été constaté non seulement que le procédé permettait d'obtenir des extraits concentrés de saveurs, mais surtout que ces extraits concentrés restituaient très exactement le goût de l'aliment dont ils proviennent. De plus, les nombreux essais ont permis de constater que ce procédé est a priori universel dans le sens qu'il peut être appliqué à la totalité des aliments, qu'il s'agisse de fruits, de légumes, de viandes, de poissons, de fruits de mer et/ou de condiments. Même, les aliments relativement secs peuvent être traités avec succès, en y ajoutant le cas échéant un peu d'eau avant la cuisson sous vide.

Un avantage supplémentaire des extraits concentrés selon le présent procédé est que les saveurs récoltées ont une longueur en bouche, aussi appelée caudalie, beaucoup plus grande que l'aliment dont elles sont issues. C'est justement la caudalie, c'est-à-dire la longueur en bouche ou encore la persistance des arômes dans la bouche du consommateur qui est en rapport avec la qualité du produit et donc avec sa valeur ajoutée.

De plus, la préparation d'extraits concentrés de grande qualité selon le présent procédé permet également d'augmenter la précision, c'est-à-dire la reproductibilité des compositions du cuisinier.

Les aliments sont généralement lavés avant leur traitement et ils peuvent être combinés avant d'être mis et cuits sous vide à l'étape (a). En général, l'efficacité de l'extraction peut être augmentée en découpant les aliments en petits morceaux, par exemple en morceaux de 5 à 50 grammes.

Un autre atout du procédé est sa simplicité relative. Le procédé peut être réalisé même sans équipement sophistiqué. Ainsi, la cuisson sous vide se fait dans des sachets sous vide, par exemple des sachets sous vide conventionnels avec une pompe à vide disponible dans le commerce. Le vide pratiqué ne doit pas être parfait, d'une manière générale la pression résiduelle dans le sachet sous vide est d'au plus 250 mbar (pression absolue), de préférence d'au plus 100 mbar, de manière avantageuse d'au plus 50 mbar, idéalement de 8 à 20 mbar. Dans ce contexte, il est à noter que l'étape de cuisson sous vide n'est pas ce qui est communément appelé « cuisson sous vide », car cette dernière méthode ne vise pas à produire (ni à récolter) un exsudat, mais au contraire à conserver l'aliment dans l'emballage sous vide jusqu'à sa consommation. Ici, après la cuisson, le sachet est ouvert, l'exsudat est récolté (de préférence sans presser l'aliment) et l'aliment vidé de sa substance est jeté.

De préférence, cet exsudat est ensuite filtré avant d'être congelé. L'étape de congélation peut être réalisée de toute manière appropriée. De préférence cependant, la congélation se fait également sous vide pour des raisons hygiéniques. Afin de pouvoir séparer ensuite les cristaux de glace de l'extrait concentré, l'exsudat congelé et retiré du sachet, est brisé mécaniquement, puis soumis à une ou plusieurs périodes de centrifugation (essorage) pour enlever les cristaux de glace des saveurs ainsi concentrées.

En variante, la congélation peut se faire dans un appareil de type sorbetière ou de type machine à granité, où l'exsudat est congelé sous agitation modérée constante. La séparation peut ensuite se faire sans briser mécaniquement l'exsudat. L'étape de centrifugation peut être réalisée comme décrit précédemment.

L'extrait concentré de saveurs prêt à l'emploi peut se conserver réfrigéré ou sous vide ou par tout autre moyen approprié. Si nécessaire ou souhaité, le procédé d'extraction et de concentration des saveurs peut en outre comprendre une étape (e) de lyophilisation de l'extrait concentré de saveurs.

Dans une variante particulièrement préférée, le procédé d'extraction et de concentration des saveurs selon l'invention est effectué de manière à ce que la durée de cuisson sous vide de l'étape (a) est de 10 à 14 heures à une température de 80 à 86°C pour les légumes, les fruits et la viande et de 1 à 4 heures à une température de 80 à 86°C pour le poisson, les coquillages et les crustacés.

Dans certaines variantes encore davantage préférées, le procédé d'extraction et de concentration des saveurs comprend en outre une ou plusieurs étapes de fermentation des aliments et/ou de l'extrait concentré.

Dans certaines variantes, cette fermentation peut donc se faire avant l'étape (a). Dans ces cas, elle est réalisée de préférence après la découpe éventuelle des aliments et de manière particulièrement préférée sans lavage (intense) des aliments. En effet, l'étape de fermentation est réalisée de préférence à l'aide des levures ou bactéries contenus dans et sur le ou les aliments (souches dites sauvages). Il est particulièrement important de noter que la fermentation avec les souches sauvages permet d'obtenir des goûts différents en fonction de l'origine de l'aliment de départ, même pour un aliment sinon identique. En effet, les souches sauvages varient très fortement d'une région à l'autre et les arômes et saveurs produits par l'étape de fermentation sont donc variables. Il devient ainsi possible d'exprimer le terroir, c'est-à-dire de révéler le goût du terroir des aliments.

En variante ou en outre, l'extrait concentré issu de l'étape (d) peut être soumis à une fermentation. Comme, au vu des étapes précédentes, l'extrait concentré ne contient pas (suffisamment) de levures ou de bactéries, il est généralement nécessaire d'ajouter des levures et/ou bactéries à l'extrait concentré. Ceci peut être réalisé soit au moyen de souches disponibles dans le commerce, dites souches standards, ou encore au moyen de souches spécialement cultivées provenant par exemple de fermentations précédentes ou cultivées au départ du ou des aliments de départ (utilisés pour l'étape (a)).

La ou les étapes de fermentation sont des processus anaérobies et sont par conséquent réalisées à l'abri de l'oxygène, généralement dans un récipient essentiellement hermétique, de préférence muni d'un dispositif de limitation de la surpression, par exemple un bocal à joint de caoutchouc. La fermentation est de préférence de type fermentation lactique, fermentation alcoolique, fermentation acétique, fermentation butyrique, fermentation propionique ou fermentation malolactique, ou encore une combinaison de deux ou de plusieurs de ces types de fermentation.

L'étape de fermentation peut être réalisée avec ou sans ajout d'eau, de sel et/ou de sucres. Selon l'ajout et le dosage, le type de fermentation (prédominant) peut être varié et favorisé.

La fermentation des aliments ou des extraits concentrés a plusieurs avantages importants. D'une manière générale, la fermentation exhausse le goût du produit initial (aliment ou extrait concentré) par la création d'une multitude de composés aromatiques et apporte donc une profondeur et une richesse aromatiques. De plus, la fermentation entraine généralement la destruction des bactéries pathogènes éventuelles (*Listeria, Salmonella,* etc.) par différents mécanismes, dont la multiplication rapide des levures et bactéries responsables de la fermentation, la production de composés nocifs pour les agents pathogènes, l'augmentation de température, etc. La fermentation permet par conséquent de supprimer ou diminuer le recours à la chimie dans l'alimentation.

Les conditions dans lesquelles la ou les fermentations sont réalisées dépendent d'une part des aliments de départ et d'autre part du résultat attendu. D'une manière générale, il n'est pas favorable d'effectuer la fermentation de façon trop rapide. Une température entre 10 et 30 °C, de préférence entre 15 et 25 °C, de manière particulièrement avantageuse entre 19 et 23 °C est favorable pour démarrer la fermentation anaérobie dans le contexte de la présente invention. Souvent après quelques jours, il est préférable de réduire la température, de quelques degrés pour laisser la fermentation continuer pendant quelques jours à quelques semaines (ou plus dans certains cas). Le goût va évoluer tout au long de cette période. L'utilisateur pourra ainsi goûter régulièrement pour savoir quand cela sera optimum pour l'utilisation envisagée.

La fermentation est généralement associée à la production de gaz carbonique. Dans une variante particulièrement avantageuse, la fermentation est réalisée sur l'extrait concentré et l'extrait fermenté est utilisé, éventuellement après filtration, dans les préparations, notamment des boissons pétillantes, en particulier des boissons de type "bière".

Dans un aspect supplémentaire, l'invention prévoit en outre l'étape (e) d'utilisation d'un ou de plusieurs extraits concentrés de saveurs obtenus par un procédé tel que décrit ci-dessus, pour la préparation de plats, pour la préparation de potages, pour la préparation de purées, pour la préparation de sauces, pour la préparation de condiments, pour l'aromatisation de boissons, desserts, confiseries et glaces. Les boissons peuvent être des boissons alcoolisées ou non, comme le vin, le champagne, la bière, l'eau gazeuse ou non, les infusions, les cocktails, etc. Dans des variantes particulièrement intéressantes, le procédé comprend l'utilisation d'un ou de plusieurs extraits concentrés de saveurs obtenus pour la préparation d'une grande variété de boissons non alcoolisées qui présentent une complexité absolue comparable à celle du vin (contrairement aux sodas connus).

Sont décrits également des potages, des purées, des sauces, des condiments, des boissons, des desserts, des confiseries et des glaces, comprenant un ou plusieurs extraits concentrés de saveurs obtenus par un procédé tel que décrit dans ce document. Plusieurs extraits concentrés peuvent être mélangés afin de créer des assemblages comme pourrait le faire un vigneron, par exemple des blends ou mélanges composés.

Grâce au procédé simple décrit ici et grâce aux extraits concentrés de saveurs ainsi obtenus, il est possible de préparer des plats sains et pleins de saveur(s). Ceci est bien sûr intéressant pour toutes les préparations, mais revêt un intérêt accru dans la préparation de sauces, de potages et de purées. D'une manière générale, en permettant d'extraire et de concentrer le goût authentique des aliments, la présente invention ouvre de nouvelles applications, notamment dans le domaine de la santé, de la diététique et de l'alimentation pour personnes âgées en permettant d'offrir des préparations saines et sapides sans recourir aux exhausteurs de goût ou similaire. Un avantage particulier de la présente invention est qu'il permet en outre apporter une texture du goût, c'est-à-dire de la texture en bouche, notamment des textures sablées, feuilletées, etc.

D'autres particularités et caractéristiques de l'invention ressortiront de la description détaillée de quelques exemples de réalisation avantageux présentés ci-dessous, à titre d'illustration.

### Exemples

Quelques exemples du présent procédé appliqué à différents aliments vont illustrer la présente invention.

### Extraction et concentration de céleri rave (variante 1)

### Ingrédients :

1 kg céleri rave avec la peau, taillé en gros dés
600 g d'eau

### Extraction :

Laver le céleri rave.

Tailler le céleri rave en mirepoix.

Le mettre dans un sac sous vide avec l'eau puis souder le sac.

Cuire à 83°C pendant 12 h (en vapeur)
Une fois cuit, passer le liquide à travers un papier Tork.

Une fois le tout bien passé, mettre ce liquide en cellule de refroidissement.

### Concentration :

Une fois ce liquide froid le mettre sous vide et le congeler en cellule de refroidissement.

Une fois congelé, réduire le bloc congelé en granité en tapant dessus à l'aide d'un rouleau à pâtisserie puis passage à la centrifugeuse.

En variante, le liquide froid peut être introduit dans une machine à granité. Lorsque l'eau est congelée sous forme de cristaux, le granité est passé à l'essoreuse ou à la centrifugeuse. Dans encore une autre variante, le liquide peut être introduit dans une machine de cryo-concentration à vis sans fin ou similaire avant le passage à la centrifugeuse.

### Réserver au réfrigérateur.

La longueur en bouche ou caudalie de cet extrait concentré de saveurs de céleri rave est de 1 à 1,5 minutes, par comparaison à environ 10 à 20 secondes pour le céleri rave normal.

### Extraction et concentration de céleri rave (variante 2)

### Ingrédients :

1 kg céleri rave avec la peau, lavé et découpé en morceaux réguliers de 30 g, 600 g d'eau

### Extraction :

Mettre les ingrédients ci-dessus dans un sac sous vide, puis souder le sac.

Cuire à 83°C pendant 12 h, laisser reposer pendant 2 h.

Filtrer le liquide au superbag.

### Concentration :

Mettre ce liquide dans une sorbetière et laisser cristalliser.

Passage à la centrifugeuse (3 fois).

Réserver au frais.

### Extraction et concentration de sole

### Ingrédients :

500 g de filet de sole, 20 g de céleri branche, 2,5 g de sel

### Extraction :

Mettre les ingrédients ci-dessus dans un sac sous vide, puis souder le sac.

Cuire à 85°C pendant 1 h.

Agiter, mixer et filtrer l'exsudat obtenu.

### Concentration :

Mettre ce liquide dans une sorbetière et laisser cristalliser.

Passage à la centrifugeuse.

Réserver au réfrigérateur.

### Extraction et concentration de poulet

### Ingrédients :

1 kg de poulet avec la peau, 30 g de carotte, 20 g de céleri branche, 260 g de gelée de pied de veau, 600 g d'eau

### Extraction :

Couper et mettre les ingrédients ci-dessus dans un sac sous vide, puis souder le sac.

Cuire à 83°C pendant 12 h.

Agiter, mixer et filtrer l'exsudat obtenu.

Mettre l'exsudat sous vide et le congeler en cellule de refroidissement.

Réduire le bloc congelé en granité puis passage à la centrifugeuse.

Réserver au réfrigérateur.

### Extraction et concentration de céleri fermenté

### Ingrédients :

2 kg de céleri rave
1 l d'eau non chlorée
30 g de gros sel sans additifs (ni iodé, ni fluoré, sans E 536)

### Fermentation

Faire la saumure : si l'eau du robinet est chlorée, il suffit de la faire bouillir et refroidir pour évaporer le chlore. Sinon, une eau de source convient très bien, mais pas une eau minérale. Faire dissoudre le sel dans l'eau. On l'utilise toujours froide.

Choisir de beaux céleris, fraîchement cueillis, pas trop gros pour qu'ils ne soient pas creux. Les éplucher mais ne pas les rincer, sauf s'ils sont souillés de terre.

Émincer les céleris en lamelles, ou les râper sur une grosse râpe. Les tasser dans des bocaux à joint de caoutchouc.

Verser la saumure froide jusqu'à submerger les légumes. Il est important de laisser 2 cm entre le niveau du liquide et le bord du récipient, car la fermentation fera augmenter le volume. Fermer hermétiquement les bocaux.

Stocker les bocaux entre 19°C et 23°C pendant 7 jours pour démarrer la fermentation puis les garder entre 15 et 17°C pendant au moins 2 semaines supplémentaires. Ils se conserveront plusieurs années, même à température ambiante.

(La même technique s'applique aux carottes, navets, radis, betteraves, chou rave, panais, etc.)

### Extraction :

Mettre le céleri avec le jus dans un sac sous vide puis souder le sac.

Cuire à 83°C pendant 12 h (en vapeur)

Une fois cuit, passer le liquide à travers un papier Tork.

Une fois le tout bien passé, mettre ce liquide en cellule de refroidissement.

### Concentration :

Une fois ce liquide froid le mettre sous vide et le congeler en cellule de refroidissement.

Une fois congelé, réduire le bloc congelé en granité en tapant dessus à l'aide d'un rouleau à pâtisserie puis passage à la centrifugeuse.

Réserver au réfrigérateur.

### Fermentation d'extrait concentré de coing

### Limonade de coing aux grains de kéfir

Mélanger 500 ml d'extraction de coing avec 1 cuillère à soupe de grains de kéfir, laisser à température ambiante jusqu'à ce que cela pétille, soit environ 60 heures.

Filtrer les grains pour les récupérer et mettre la préparation en bouteille à fermeture mécanique, sans emplir jusqu'en haut.

Attendre encore 48 heures puis réfrigérer. Ouvrir avec précautions.

## Revendications

1. Procédé d'extraction et de concentration des saveurs d'un ou de plusieurs aliments, comprenant les étapes de
(a) cuisson du ou des aliments sous vide pendant une durée de 1 à 15 heures, de préférence entre 1,5 et 13 heures à une température entre 50 et 90°C, de préférence entre 70 et 88°C, de manière davantage préférée entre 80 et 86°C, afin d'obtenir un exsudat du ou des aliments,
(b) récolte de l'exsudat,
(c) cristallisation de l'eau contenue dans l'exsudat sous forme de glace par congélation de l'exsudat, et
(d) obtention d'un extrait concentré de saveurs au départ de l'exsudat par séparation des cristaux de glace du restant de l'exsudat,
dans lequel l'étape (a) de cuisson sous vide est réalisée dans des sachets de type sachets sous vide.

2. Procédé d'extraction et de concentration des saveurs selon la revendication 1, comprenant en outre une étape de fermentation des aliments avant l'étape (a) et/ou de l'extrait concentré après l'étape (d), la fermentation étant de préférence une fermentation lactique, alcoolique, acétique, butyrique, propionique et/ou malolactique.

3. Procédé d'extraction et de concentration des saveurs selon la revendication 2, comprenant une étape de fermentation avant l'étape (a), la fermentation étant réalisée à l'aide des levures ou bactéries contenus dans et sur le ou les aliments.

4. Procédé d'extraction et de concentration des saveurs selon la revendication 2, comprenant une étape de fermentation après l'étape (d), la fermentation étant réalisée à l'aide de levures et/ou de bactéries ajoutées à l'extrait concentré.

5. Procédé d'extraction et de concentration des saveurs selon l'une quelconque des revendications 1 à 4, dans lequel le ou les aliments sont lavés et/ou découpés en morceaux avant l'étape (a).

6. Procédé d'extraction et de concentration des saveurs selon l'une quelconque des revendications 1 à 5, dans lequel l'étape (b) comprend en outre la filtration de l'exsudat récolté.

7. Procédé d'extraction et de concentration des saveurs selon l'une quelconque des revendications 1 à 6, dans lequel la séparation des cristaux de glace est réalisée par une ou plusieurs périodes de centrifugation.

8. Procédé d'extraction et de concentration des saveurs selon l'une quelconque des revendications 1 à 7, dans lequel l'étape (c) se fait également sous vide.

9. Procédé d'extraction et de concentration des saveurs selon la revendication 8, dans lequel l'étape (c) est également réalisée dans des sachets de type sachets sous vide.

10. Procédé d'extraction et de concentration des saveurs selon l'une quelconque des revendications 1 à 9, comprenant en outre une étape (e) de lyophilisation de l'extrait concentré de saveurs.

11. Procédé d'extraction et de concentration des saveurs selon l'une quelconque des revendications 1 à 10, dans lequel la durée de cuisson sous vide de l'étape (a) est de 10 à 14 heures à une température de 80 à 86°C pour les légumes, les fruits et la viande et de 1 à 4 heures à une température de 80 à 86°C pour le poisson, les coquillages et les crustacés.

12. Procédé d'extraction et de concentration des saveurs selon l'une quelconque des revendications 1 à 11, comprenant en outre l'étape (f) d'utilisation d'un ou de plusieurs extraits concentrés de saveurs obtenus à l'étape (d) pour la préparation de plats, pour la préparation de potages, pour la préparation de purées, pour la préparation de sauces, pour la préparation de condiments ou pour l'aromatisation de boissons, desserts, confiseries et glaces.

13. Procédé d'extraction et de concentration des saveurs selon la revendication 12, dans lequel les boissons sont choisies parmi les boissons alcoolisées ou non, comme le vin, le champagne, la bière, l'eau gazeuse ou non, les infusions et les cocktails.

## Patentansprüche

1. Verfahren zum Extrahieren und Konzentrieren der Geschmacksstoffe eines oder mehrerer Lebensmittel, wobei es die folgenden Schritte umfasst
(a) Kochen des oder der Lebensmittel(s) unter Vakuum während einer Dauer von 1 bis 15 Stunden, vorzugsweise zwischen 1,5 und 13 Stunden, bei einer Temperatur zwischen 50 und 90 °C, vorzugsweise zwischen 70 und 88 °C, auf stärker bevorzugte Weise zwischen 80 und 86 °C, um ein Exsudat des oder der Lebensmittel(s) zu erhalten,
(b) Gewinnen des Exsudats,
(c) Auskristallisieren des im Exsudat enthaltenden Wassers in Form von Eis, indem das Exsudat eingefroren wird, und
(d) Erhalten eines konzentrierten Extrakts von Geschmacksstoffen, ausgehend vom Exsudat, indem die Eiskristalle vom verbleibenden Exsudat abgetrennt werden,
wobei der Schritt (a) des Kochens unter Vakuum in Beuteln vom Typ Vakuumbeutel durchgeführt wird.

2. Verfahren zum Extrahieren und Konzentrieren von Geschmacksstoffen nach Anspruch 1, wobei es weiterhin einen Schritt des Fermentierens der Lebensmittel vor dem Schritt (a) und/oder des konzentrierten Extrakts nach dem Schritt (d) umfasst, wobei es sich bei der Fermentation vorzugsweise um eine Milchsäure-, alkoholische, Essigsäure-, Buttersäure-, Propionsäure- und/oder malolaktische Gärung handelt.

3. Verfahren zum Extrahieren und Konzentrieren von Geschmacksstoffen nach Anspruch 2, wobei es weiterhin einen Schritt des Fermentierens vor dem Schritt (a) umfasst, wobei das Fermentieren mit Hilfe der Hefen oder Bakterien erfolgt, welche in oder auf dem/den Lebensmittel(n) enthalten sind.

4. Verfahren zum Extrahieren und Konzentrieren von Geschmacksstoffen nach Anspruch 2, wobei es weiterhin einen Schritt des Fermentierens nach dem Schritt (d) umfasst, wobei das Fermentieren mit Hilfe von Hefen und/oder Bakterien erfolgt, welche dem konzentrierten Extrakt zugesetzt werden.

5. Verfahren zum Extrahieren und Konzentrieren von Geschmacksstoffen nach einem beliebigen der Ansprüche 1 bis 4, wobei das oder die Lebensmittel vor dem Schritt (a) gewaschen und/oder in Stücke geschnitten werden.

6. Verfahren zum Extrahieren und Konzentrieren von Geschmacksstoffen nach einem beliebigen der Ansprüche 1 bis 5, wobei der Schritt (b) darüber hinaus das Filtrieren des gewonnenen Exsudats umfasst.

7. Verfahren zum Extrahieren und Konzentrieren von Geschmacksstoffen nach einem beliebigen der Ansprüche 1 bis 6, wobei das Abtrennen der Eiskristalle durch einen oder mehrere Zeitabschnitte des Zentrifugierens erfolgt.

8. Verfahren zum Extrahieren und Konzentrieren von Geschmacksstoffen nach einem beliebigen der Ansprüche 1 bis 7, wobei der Schritt (c) ebenfalls unter Vakuum abläuft.

9. Verfahren zum Extrahieren und Konzentrieren von Geschmacksstoffen nach Anspruch 8, wobei der Schritt (c) ebenfalls in Beuteln vom Typ Vakuumbeutel durchgeführt wird.

10. Verfahren zum Extrahieren und Konzentrieren von Geschmacksstoffen nach einem beliebigen der Ansprüche 1 bis 9, wobei es darüber hinaus einen Schritt (e) des Gefriertrocknens des konzentrierten Extrakts von Geschmacksstoffen umfasst.

11. Verfahren zum Extrahieren und Konzentrieren von Geschmacksstoffen nach einem beliebigen der Ansprüche 1 bis 10, wobei die Dauer des Kochens unter Vakuum im Schritt (a) für Gemüse, Obst und Fleisch 10 bis 14 Stunden bei einer Temperatur von 80 bis 86 °C und für Fisch, Schalentiere und Krustentiere 1 bis 4 Stunden bei einer Temperatur von 80 bis 86 °C beträgt.

12. Verfahren zum Extrahieren und Konzentrieren von Geschmacksstoffen nach einem beliebigen der Ansprüche 1 bis 11, wobei es darüber hinaus den Schritt
(f) des Verwendens eines oder mehrerer konzentrierter Extrakte von Geschmacksstoffen, wie sie in Schritt (d) erhalten wurden, zur Zubereitung von Gerichten, zur Zubereitung von herzhaften Suppen, zur Zubereitung von Pürees, zur Zubereitung von Soßen, zur Zubereitung von Würzmitteln oder zur Aromatisierung von Getränken, Nachspeisen, Süßwaren und Speiseeis
umfasst.

13. Verfahren zum Extrahieren und Konzentrieren von Geschmacksstoffen nach Anspruch 12, wobei die Getränke aus den alkoholhaltigen oder alkoholfreien Getränken, wie etwa aus Wein, Champagner, Bier, kohlensäurehaltigem oder stillem Wasser, Kräuter- und Früchtetees sowie Cocktails, ausgewählt sind.

## Claims

1. Method for extracting and concentrating flavors of one or more foodstuffs, comprising the steps of
(a) cooking the foodstuff or foodstuffs under vacuum for a duration of 1 to 15 hours, preferably between 1.5 and 13 hours, at a temperature of between 50 and 90°C, preferably between 70 and 88°C, more preferably between 80 and 86°C, in order to obtain an exudate of the foodstuff or foodstuffs,
(b) collecting the exudate,
(c) crystallizing the water contained in the exudate in the form of ice by freezing the exudate, and
(d) obtaining a concentrated extract of flavors from the exudate by separating the ice crystals from the remainder of the exudate,
wherein step (a) of under-vacuum cooking is carried out in bags of the vacuum bag type.

2. Method for extracting and concentrating flavors according to claim 1, further comprising a step of fermenting the foodstuffs before step (a) and/or the concentrated extract after step (d), the fermentation preferably being lactic, alcoholic, acetic, butyric, propionic and/or malolactic fermentation.

3. Method for extracting and concentrating flavors according to claim 2, comprising a fermentation step before step (a), the fermentation being carried out using yeasts or bacteria contained in and on the foodstuff or foodstuffs.

4. Method for extracting and concentrating flavors according to claim 2, comprising a fermentation step after step (d), the fermentation being carried out using yeasts and/or bacteria added to the concentrated extract.

5. Method for extracting and concentrating flavors according to any of claims 1 to 4, wherein the foodstuff or foodstuffs are washed and/or cut into pieces before step (a).

6. Method for extracting and concentrating flavors according to any of claims 1 to 5, wherein step (b) further comprises filtering the collected exudate.

7. Method for extracting and concentrating flavors according to any of claims 1 to 6, wherein the ice crystals are separated by one or more periods of centrifugation.

8. Method for extracting and concentrating flavors according to any of claims 1 to 7, wherein step (c) is also carried out under vacuum.

9. Method for extracting and concentrating flavors according to claim 8, wherein step (c) is also carried out in bags of the vacuum bag type.

10. Method for extracting and concentrating flavors according to any of claims 1 to 9, further comprising a step (e) of freeze-drying the concentrated flavor extract.

11. Method for extracting and concentrating flavors according to any of claims 1 to 10, wherein the under-vacuum cooking duration of step (a) is from 10 to 14 hours at a temperature of 80 to 86°C for vegetables, fruit and meat, and from 1 to 4 hours at a temperature of 80 to 86°C for fish, shellfish and crustaceans.

12. Method for extracting and concentrating flavors according to any of claims 1 to 11, further comprising the step of
(f) using one or more concentrated flavor extracts obtained in step (d) for preparing meals, for preparing soups, for preparing purees, for preparing sauces, for preparing condiments or for flavoring beverages, desserts, confectionery and ice creams.

13. Method for extracting and concentrating flavors according to claim 12, wherein the beverages are selected from alcoholic or non-alcoholic beverages, such as wine, champagne, beer, sparkling or still water, infusions and cocktails.
